# EUROPEAN PATENT APPLICATION

(11) **EP 2 011 617 A1**
(43) Date of publication of application: **07.01.2009**
(21) Application number: 07388052.8
(22) Date of filing: 02.07.2007
(51) Int. Cl.: B29B 11/14, B29C 49/64, B29B 11/08, B29C 35/08, B29C 49/06, B29C 49/22

(54) **A method of stretch-blow-moulding a product, a preform for use in the method and a product produced by the method**

(71) Applicant: Carlsberg Breweries A/S, 1760 Copenhagen V (DK)
(72) Inventor: Vesborg, Steen, 2820 Gentofte (DK); Rasmussen, Jan Norager, 3650 Olstykke (DK)
(74) Representative: Nielsen, Henrik Sten

(57) **Abstract**

A method of stretch-blow-moulding a product, such as a bottle or container, from a preform (10), comprises providing the preform (10) including an inner blank (16) of a first polymeric composition, and an outer blank (14) of a second polymeric composition different from the first polymeric composition. The inner blank is loosely positioned within the outer blank, the first polymeric composition having a first absorption spectrum and the second polymeric composition having a second absorption spectrum different from the first absorption spectrum. The first absorption spectrum includes a first absorption peak wavelength or wavelengths and the second absorption spectrum includes a second absorption peak wavelength or wavelengths. The method of stretch-blow-moulding a product further comprises irradiating the preform with radiation of a first intensity for a first specific period of time and irradiating the preform with radiation of a second intensity for a second specific period of time so as to cause the first blank to be solidified independently of the solidification of the second blank.

## Description

The present invention relates to a method of stretch-blow-moulding a product, a preform for use in the method and a product produced by the method.

It is well known to stretch blow mould polyesters like PET from an injection moulded preform on a commercial scale since the days of Nathaniel Wyeth at DuPont demonstrated the reheat process. AOKI and Nissei developed the injection blow moulding technology into a viable alternative to the reheat and blow process. Such blow moulded hollow articles are to a large extent used for the distribution of beverages - PET bottles or containers have become a generic term.

There are several problems associated with the technology:
Lack of barrier for water, CO₂, and O₂
Lack of barrier for certain wavelengths of light, which can rapidly deteriorate the taste of the beverage.
Generation of the off taste ingredient acetic aldehyde, by deterioration of the polymer itself.
Cost of the polymer which has high value in other fields, such as electrical dielectric in capacitors and as the most important fabric fibre material for clothing and carpets.

Also, it is well known to improve barrier properties by coinjection of the preforms in up to 7 layers. These are after reheating blown in one go. During this production process it is of the utmost importance to avoid delamination.

For some purposes metal or glass containers have been used in order to achieve appropriate barrier and mechanical properties or for containing e.g. highly corrosive materials or heated materials.

The use of containers of metal and glass are often quite expensive and often involve a recycling process. This may give rise to high handling costs.

An object of the present invention is to provide a novel technique eliminating the drawbacks relating to conventional metal or glass containers and further eliminating the prior art limitations in relation to the combination of polymeric compositions in bottles or containers, in particular PET bottles or containers.

A further object of the present invention is to provide a novel technique rendering it possible to produce a product such as a bottle or a container including two or more distinct parts chosen for their specific intentional application and with no attention to the order of layers within the bottle or container.

A particular feature of the present invention relates to the fact that a bottle or container is provided, in which an inner part is present, which inner part may be loosely positioned within an outer part and originating from a separate inner blank solidified in one and the same process in which the outer blank is solidified for producing the outer part or, alternatively, allowing the bottle or container to be provided, including two or more parts which are originating from individual blanks positioned within one another and joined together or, alternatively, loosely positioned with one another.

The above objects, the above feature together with numerous other objects, features and advantages which will be evident from the below detailed description of the present invention, is in accordance with a first aspect of the present invention obtained by a method of stretch-blow-moulding a product, such as a bottle or container, from a preform, comprising
- providing the preform including an inner blank of a first polymeric composition, and an outer blank of a second polymeric composition different from the first polymeric composition, the inner blank being loosely positioned within the outer blank, the first polymeric composition having a first absorption spectrum and the second polymeric composition having a second absorption spectrum different from the first absorption spectrum, the first absorption spectrum including a first absorption peak wavelength or wavelengths, the second absorption spectrum including a second absorption peak wavelength or wavelengths, the first absorption peak wavelength or wavelengths being different from the second absorption peak wavelength or wavelengths, and,
- irradiating the preform with radiation of a first intensity for a first specific period of time including the first absorption peak wavelength or wavelengths and irradiating the preform with radiation of a second intensity for a second specific period of time including the second absorption peak wavelength or wavelengths so as to cause the first blank to be solidified independently of the solidification of the second blank.

According to the basic teachings of the present invention the inner and outer blanks may be solidified in a single process or alternatively in separate process steps by irradiating the inner and outer blanks with specific wavelength or wavelengths causing solidification of the inner and the outer blanks due to the specific absorption qualities of the inner and outer blanks.

In the present specification, the technique is described in relation to stretch-blow-moulding however, it is contemplated that an alternative technique may possibly also be used provided the need exists for solidifying separate inner and outer blanks or similar components in separate process steps or in a single process step by the use of the absorption technique involving the irradiation of the blanks or components by specific wavelength or wavelengths for causing selectively solidification of the inner and outer blanks.

It is to be understood that the novel technique according to the present invention renders it possible to produce bottles or containers including more than two blanks such as a fairly large number of blanks for the manufacture of bottles or containers having a multiplicity of separate bottles or containers positioned within one another.

The polymeric compositions of the first and the second blanks may be chosen in order to provide adhesion between the final parts of the product produced or alternatively may be chosen so as to prevent the inner and outer parts of the final product to adhere to one another in order to provide a loosely positioned inner bottle or container within an outer shell constituting an outer bottle or container.

In accordance with the method according to the first aspect of the present invention, the inner and the outer blanks are preferably produced in an injection moulded process as the inner and outer blanks are produced in a single injection moulding process as the polymeric compositions are coinjected in the moulding process.

Alternatively, the inner and outer blanks may be joined together in a mechanical process or simply assembled by two separate blanks, the inner blank being positioned within the outer blank, or alternatively, the coinjection moulding process and the mechanical assembling technique may further alternatively be combined. e.g. provided a bottle or container including more than two parts such as a multipart bottle or container is to be produced.

In order to obtain the above described advantageous feature of the present invention relating to the individual or separate solidification of the inner and outer blanks by irradiating the inner and outer blanks by specific wavelength or wavelengths causing the separate or individual solidification of the inner and outer blanks, a specific absorption constituent such as carbon blank or aluminium dioxide may be added to one or both polymeric compositions.

It is to be understood that the technique according to the present invention allows the solidification of an inner blank having a higher solidification temperature than the outer blank as the inner blank is simply solidified by irradiating the inner blank with aspecific wavelength or wavelengths which is or are transmitted through the outer blank and causes or cause no substantial solidification of the outer blank.

As stated above, the inner blank may be adhered to the outer blank, e.g. through an interlayered adhesive layer which is caused to solidify in the process of solidifying the inner or the outer blanks. Provided the inner and outer blanks are to be joined or sealed to one another, the technique allows the manufacture of e.g. a bottle to be used for containing beverages such as carbonated beverages, e.g. beer.

In an alternative application of the method according to the first aspect of the present invention, the inner blank is loosely positioned within the outer blank rendering it possible to produce in a single process step a keg for a draught beer system in which keg the part originating from the inner blank constitutes a collapsible bag and the part of the keg originating from the outer blank constitutes the outer container.

The technique of solidifying the inner blank independently of the solidification of the outer blank according to the method according to the first aspect of the present invention may be carried out by using a single irradiating source, irradiating or emitting the first absorption peak wavelength or wavelengths and also the second absorption peak wavelength or wavelengths, or alternatively, separate irradiating sources may be used for causing the solidification of the inner blank independently of the solidification of the outer blank according to the teachings of the present invention.

As described above, the absorption properties of the inner and/or outer blanks may be modified by adding absorption constituent to the inner and/or outer blanks preferably in order to adjust the period of time of irradiation of the two blanks in order to have identical first and second specific periods of time for irradiating the inner and the outer blanks. For certain applications, the first and second specific periods of time may be different from one another.

The irradiation intensities needed for causing solidification of the inner and outer blanks depend on the polymeric compositions in question and also the thicknesses of the inner and outer blanks together with numerous other characteristics of the stretch-blow-moulding process and also the materials and compositions involved.

The polymeric compositions of the first and the second blanks may be freely chosen as discussed above for fulfilling specific intentional properties of the final inner and outer parts of the final bottle or container, and consequently, the polymeric compositions may be chosen among any hydrophilic or hydrophobic polymeric compositions such as polyolephines and polyester polymers.

In the presently preferred embodiment of the method according to the first aspect of the present invention, the first polymeric composition is PP (polypropylene) and the second polymeric composition is PET (polyethylene terefthalate) allowing the manufacture of a final product including a collapsible inner bag made form polypropylene and contained within an outer PET container or keg.

The irradiation used for solidifying the inner blank and the irradiating used for solidifying the outer blank may be any relevant electromagnetic radiation such as UV, visible light or preferably and advantageously IR irradiation, consequently, the irradiation causing the solidification of the inner blank includes advantageously absorption peak wavelength or wavelengths within the infrared spectrum, and similarly, the second absorption peak wavelength or wavelengths are included in part of the infrared spectrum separate from the first absorption peak wavelength or wavelengths.

It is in this context to be understood that the conventional IR spectra of polymeric compositions are measured at room temperature and, therefore, during the process of solidification of the inner and outer blanks, wavelength or wavelengths intervals need to be used different from the conventional room temperature absorption spectra of the polymeric compositions in question, which spectra may be deduced empirically.

The above objects, the above feature together with numerous other objects, features and advantages which will be evident from the below detailed description of the present invention, is in accordance with a second aspect of the present invention obtained by an injection moulded preform for use in a method according to the first aspect of the present invention, the preform comprising an inner blank of a first polymeric composition and an outer blank of a second polymeric composition different from the first polymeric composition, the first blank being loosely positioned within the outer blank, the first polymeric composition having a first absorption spectrum and the second polymeric composition having a second absorption spectrum different from the first absorption spectrum, the first absorption spectrum including a first absorption peak wavelength or wavelengths, the second absorption spectrum including a second absorption peak wavelength or wavelengths, the first absorption peak wavelength or wavelengths being different from the second absorption peak wavelength or wavelengths.

The preform according to the second aspect of the present invention may preferably include any of the features discussed above in relation to the method according to the first aspect of the present invention.

The above objects, the above feature together with numerous other objects, features and advantages according to a third aspect of the present invention produced in accordance with a method according to the first aspect of the present invention and from the preform according to the second aspect of the present invention, the product including in accordance with the first alternative an inner stretch-blow-moulded part originating from the inner blank and loosely positioned within an outer stretch-blow-moulded part originating from the outer blank, or alternatively including an inner stretch-blow-moulded part fixated to the outer stretch-blow-moulded part.

As discussed above in relation to the method according to the first aspect of the present invention, the product produced in accordance with the first aspect of the present invention and constituting a third aspect of the present invention may include more than two parts originating from inner and outer blanks such as a multiplicity of parts originating from a multiplicity of blanks.

The below features and advantages are also considered relevant in relation to the method according to the first aspect of the present invention, the preform according to the second aspect of the present invention and further the product being a bottle, container or keg according to the third aspect of the present invention.

The present invention relates as discussed above to a product containing several containers based on two or more polymeric compositions. The product is moulded, preferably stretch blow moulded. The product is a multicontainer. The polymeric compositions are not coinjected in the process. The product is designed to have at least a first polymeric container surrounded by a second polymeric container. The first and the second polymeric containers are made of different polymeric materials. The different polymeric materials have to be selected so that the materials do not bind to each other during the production process, and that way two or more containers may be formed at the same time in the production process. The multicontainer may be produced by a multipreform, e.g. a preform-in-preform, wherein said two preforms are delaminated, due to the choice of polymeric compositions, when blow moulded, thereby creating a space between the two containers. The moulded product may be used for pressurised contents. Also, the polymeric compositions may be chosen so that the containers are flexible. Also, one or more containers may be introduced into the product according to the invention. Such introduced containers may be of any desirable material and size.

The present invention provides a product that is moulded, preferably stretch blow moulded. The product based on two or more not coinjected polymeric compositions. At least two polymeric compositions are used resulting in at least two polymeric containers or bottles, one enclosed in the other. The two polymeric containers are made of different polymeric materials. The different polymeric materials have to be selected so that the materials do not bind to each other during the production process. Before the polymeric compositions are shaped in a moulding process they are laminated, without any real bonding between them.

The method according to the present invention has in one aspect of the present invention the purpose to ascertain one hundred percent delamination, in order to create at least a double bottle or container, where the inner bottle or container just forms an inner skin. Furthermore, a bottle or container including three or more parts may also be produced.

In one embodiment of the invention the process to achieve this double bottle or container is to injection mould an ordinary PET (polyethylene terephthalate) preform and inside this form placing a PP (polypropylene) preform, in close contact with the PET preform itself. The reheating is not at all trivial, because PP is virtually transparent to infrared radiation and while placed inside the PET preform must attain temperatures throughout of 130 to 150 degrees centigrade, though at the same time the outer PET preform must only reach 90 to 115 degrees centigrade. Those are the temperatures required for biaxial orientation of the two materials. How to obtain this is outlined below.

The thermal properties of different polymeric compositions differs. This is also the case for PET and PP. Note, that the inner preform, which in this case has to be the one made out of PP also has to be heated to a higher temperature than the surrounding PET preform in order to make the biaxial stretching. This can be perceived as intuitively an impossible condition, because all radiation heating is supposed to come from the outside through the PET preform. Changing the emission coefficient as a function of wavelength of the PP makes this paradox possible. PET is a near perfect transmitter of visible light as shown above, but this visible light can be absorbed by the PP almost exclusively - by colouring the PP black (and possibly also other colours) and/or filling with suitably sized conducting particles, such as aluminium scales. In this manner a radially decreasing temperature gradient can be attained.

The PP, being a paraffinic polymeric composition, is hydrophobic in nature, whilst the PET is hydrophilic. The PP preform is therefore in no way bonded to the PET preform.

A number of other material combinations can be disjunctly joined in this manner. In fact any polyolephin can be combined with any polyester, if the required temperature gap is not too big (typically about 50°C).

Also, highly exotic, and non-bondable barrier materials can in this way be "deposited" as a barrier on the inside of a hollow body. These materials could be fluoro caoutchouc, FKM, methyl fluoro-silicone-caoutchouc, MFQ, and other very expensive special barrier polymeric compositions. Where the economy permits, these kind of materials can be used, for instance where high barrier tanks for hot oil or aggressive solvents are desired.

The above described product and process is in principle not limited to two layers in the suggested order, but the reverse order is also conceivable, and triple and more layer systems utilising different parts of the spectrum are conceivable.

The use of internal heating sources, of possibly different spectral composition, further broadens the scope of this technology.

When PP is used as inner layer, the problems with acetic aldehyde are completely eliminated, and while PET is a not a very good barrier to water vapour, PP is at least an order of magnitude better.

The product according to the invention results in a double bottle or container. The space between the two bottles or containers could be filled with a gas. The content in the inner container may be pressurised. Therefore, the polymeric compositions used should be able to withstand the built up pressure inside the container.
The polymeric materials used for the containers may be selected so that they are very flexible and that the finished product may decrease in volume when the material stored in the finished product is consumed or removed, i.e. finished product collapses gradually when the stored material is removed. Also, the outer container might be rigid and the inner container flexible, and therefore the inner container might collapse when stored material in the inner container is removed.

This type of container can be used for any type of liquid products e.g. beverages, deodorants, hairsprays. However, they may also be used for other means e.g. fire extinguishers.

Also, this type of double container could be used to store two different materials e.g. a two component adhesive, which are mixed before use in a nozzle on the top. In this case one component is stored within the inner bottle or container and the second component is stored between the inner and outer bottle or container. One or both components may be pressurised.

The present invention is now to be further described with reference to the drawings in which
Fig. 1 is a schematic view of a technique of irradiating and selectively solidifying an inner and an outer blank of a preform in a stretch-blow-moulding process,
Fig. 2 is a vertical sectional view of the solidified two-part bottle or container produced in accordance with the method shown in Fig. 1,
Fig. 3 is a diagrammatic view illustrating the advantageous property used in accordance with the solidification shown in Fig. 1 by using different irradiation wavelength or wavelengths for the two blanks having different absorption spectra,
Fig. 4 is a diagrammatic view illustrating the distribution of IR energy within a product made from PET when irradiated with IR energy from a heater,
Fig. 5 is a diagrammatic view illustrating the absorption spectra of PP and PET at room temperature, and
Fig. 6 is a scheme illustrating the differences between PP and PET in terms of glass temperature, melt temperature, thermal conductivity, specific heat and biaxial orientation.

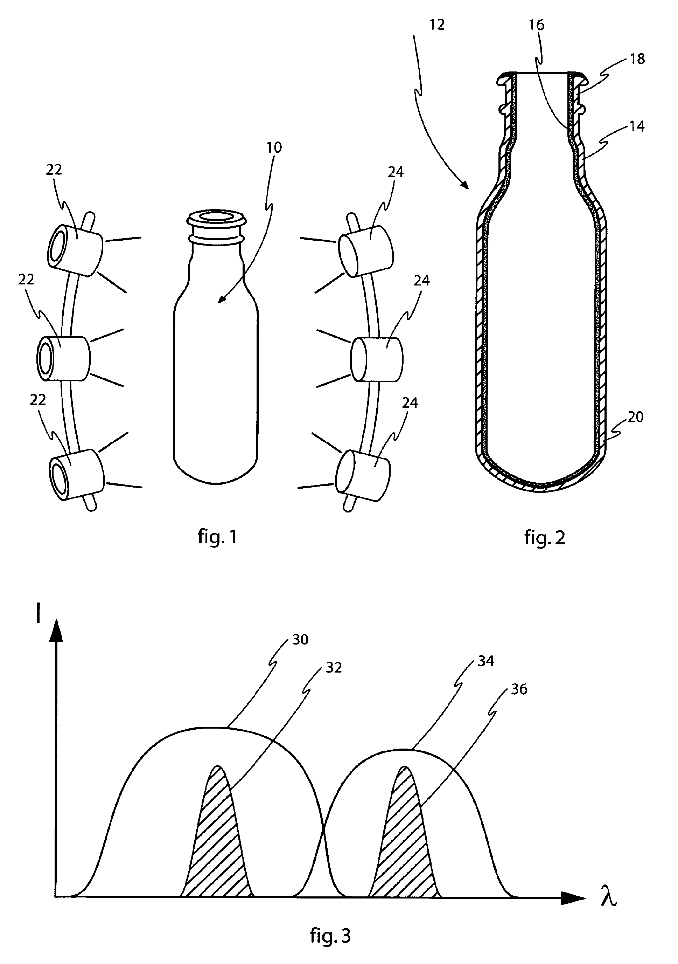

In Fig. 1, a preform 10 is shown including an inner blank and an outer blank. The preform 10 is in the process shown in Fig. 1 stretch-blow-moulded into a two-part bottle shown in Fig. 2 and comprising an outer layer or part 14 originating from the outer blank of the preform 10 and the inner part 16 originating from an inner blank of the preform 10.

The inner and the outer blanks of the preform 10 are made from different polymeric compositions, preferably polypropylene and polyethalene and polyethylene terefthalate, respectively, which are not combinable, and consequently, in the preferred embodiment shown in Fig. 2, the inner part 16 is loosely positioned within the outer part 14 of the final product 12, which comprises a bulb 20 and a neck 18. Alternatively, different polymeric compositions may be used, and a separate adhesive layer may be interposed between the two blanks of the preform 10 in order to join the final inner part 16 to the final outer part 14 through adhesion established by the adhesive layer.

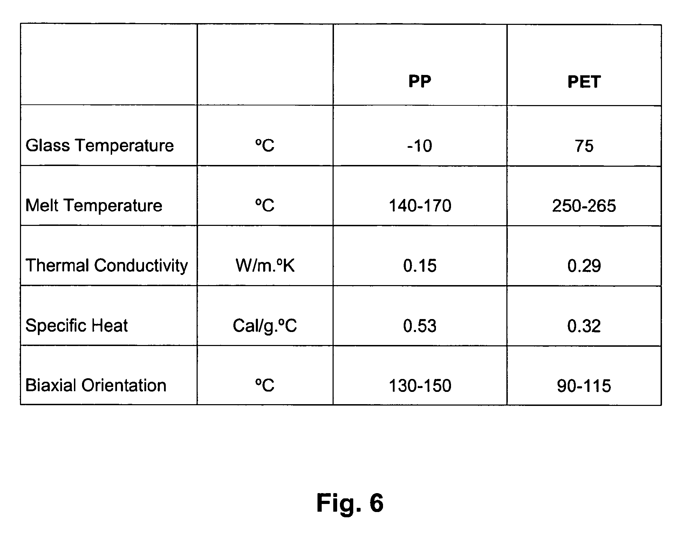

As stated above, the preferred materials for the preform are PP for the inner blank and PET for the outer blank, and as will be evident from Fig. 6, PP is biaxially orientated or solidified at a temperature higher than the temperature or biaxial orientation or solidification of the PET. Consequently, the two blanks of the preform 10 need to be heated to different temperatures and a further problem exists in that the outer blank is biaxially orientated or solidified at a lower temperature than the inner blank.

In accordance with the teachings of the present invention, the inner and outer blanks of the preform 10 are irradiated by separate IR radiating elements such as the elements 22 and 24 shown in Fig. 1 causing absorption within the inner blank of the preform 10 at a specific absorption peak wavelength or wavelengths as is schematically illustrated in Fig. 3, and causing absorption within the outer blank of the preform at a different specific absorption peak wavelength or wavelengths.

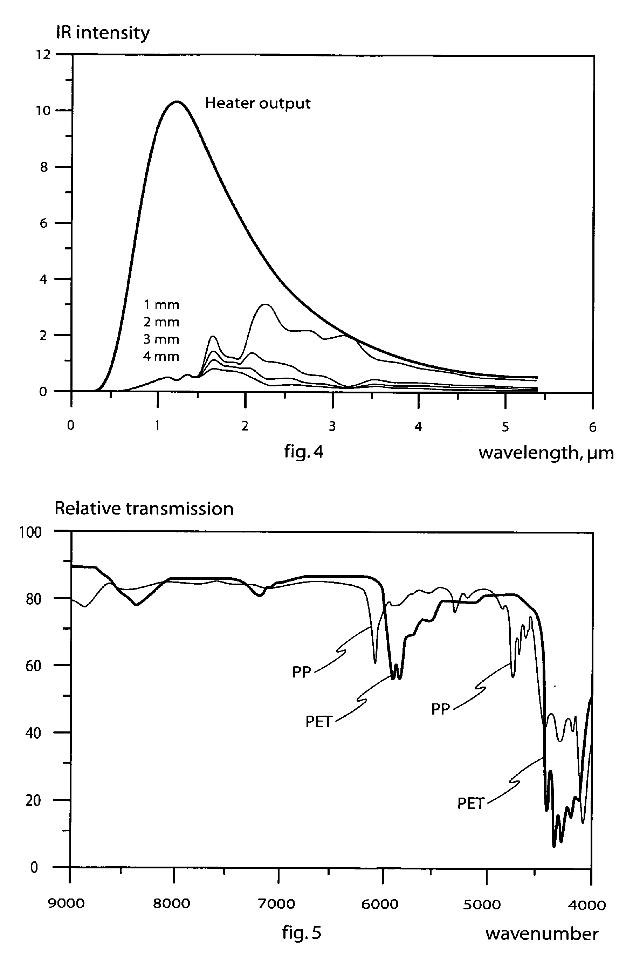

In Fig. 3, the absorption spectrum of one of the two blanks of the preform 10 is shown designated the reference numeral 30 and the absorption spectrum of the other blank of the preform 10 is designated the reference numeral 34. As will be evident from Fig. 3, the absorption spectra 30 and 34 are distinct. Consequently, by irradiating electromagnetic radiation of the wavelength interval illustrated by a peak 32 to the one blank of the preform 10 and at the same time or in a separate step irradiating electromagnetic radiation of the wavelength interval illustrated by a peak 36 to the other blank, the two blanks may be separately biaxially orientated or solidified. The basic realisation on the basis of which the present invention has been deduced relates to the fact that the outer blank should not exhibit any substantial absorption at the wavelength or wavelengths at which the inner blank is caused to be biaxially orientated or solidified as the outer blank should exhibit a low absorption or a high transmission at the absorption frequency of frequencies of the inner blank. This feature is illustrated in Fig. 4.

In Fig. 4, the wavelength is indicated along the abscissa axis and along the ordinate axis, the IR intensity is indicated. A first curve designated "heater output" represents the energy emitted from an IR irradiation source or heater irradiating at wavelengths from below 0.5 µm to above 5 µm. The irradiation from the IR source or heater is irradiated to a PET container having a wall thickness of more than 4 mm and four distinct curves below the heater output curve indicates the energy absorption at a depth of 1 mm, at a depth of 2 mm, at a depth of 3 mm and finally at a depth of 4 mm within the PET body originating from the IR energy or irradiated from the heater.

The layer closer to the IR radiating source accumulates more heat than the lower layers at a lower depth, however, of greater importance is the fact that at a wavelength below 1.5 µm, the energy emitted from the heater or the IR irradiation or emission source is not absorbed by the PET container but rather transmitted through the PET container, and consequently, the IR energy at a wavelength below 1.5 µm may consequently be utilised for the biaxial orientation or solidification of an inner blank contained within an outer blank made from PET.

As discussed above, the absorption of one of the two blanks, constituting the inner and the outer blank of the preform may be increased or tuned by adding of an absorption constituent such as aluminium dioxide or carbon black and for practical purposes, the heat absorbing constituent is advantageously added to the inner blank for causing the inner blank to be heated to a higher temperature than the outer blank and, consequently, cause biaxial orientation or solidification of the inner blank made from PP and having a temperature of biaxial irradiation of solidification between 130 and 150°C which is substantially higher than the temperature of biaxial orientation of solidification of the PET which temperature is between 90 and 115°C.

In Fig. 5, the absorption and transmission spectra of PP and PET are shown as the one curve in a thin line indicates the transmission / absorption of PP within the wave number (number of wavelengths pr 1 cm) range 3000-9000 and similarly, the heavier line curve designated PET indicates the transmission and absorption of PET within the same wave number interval.

Although the present invention has above been described with reference to presently preferred embodiments of the method of a stretch-blow-moulding product from a two-part preform, the above embodiments may readily be modified based on common general knowledge and skill, and any such modification is to be contemplated part of the present invention which is rather to be construed limited only by the below patent claims.

## Claims

1. A method of stretch-blow-moulding a product, such as a bottle or container, from a preform, comprising
- providing said preform including an inner blank of a first polymeric composition, and an outer blank of a second polymeric composition different from said first polymeric composition, said inner blank being loosely positioned within said outer blank, said first polymeric composition having a first absorption spectrum and said second polymeric composition having a second absorption spectrum different from said first absorption spectrum, said first absorption spectrum including a first absorption peak wavelength or wavelengths, said second absorption spectrum including a second absorption peak wavelength or wavelengths, said first absorption peak wavelength or wavelengths being different from said second absorption peak wavelength or wavelengths, and,
- irradiating said preform with radiation of a first intensity for a first specific period of time including said first absorption peak wavelength or wavelengths and irradiating said preform with radiation of a second intensity for a second specific period of time including said second absorption peak wavelength or wavelengths so as to cause said first blank to be solidified independently of the solidification of said second blank.

2. The method according to claim 1, said inner blank and said outer blank being produced in an injection moulding process.

3. The method according to claim 1, said inner blank and said outer blank being joined together in a mechanical process or assembling the two blanks.

4. The method according to any of the claims 1-3, said first absorption peak wavelength or wavelengths being established by adding a first absorption constituent to said first polymeric composition.

5. The method according to any of the claims 1-4, said second absorption peak wavelength or wavelengths being established by adding a second absorption constituent to said second polymeric composition.

6. The method according to any of the claims 1-5, said inner blank being adhered to said outer blank through an interlayered adhesive layer.

7. The method according to any of the claims 1-6, said inner blank being loosely positioned within the outer blank.

8. The method according to any of the claims 1-7, said irradiation of said preform being carried out by means of a single irradiation source or alternatively two or more identical or different irradiation sources.

9. The method according to any of the claims 1-8, said first specific period of time being identical to said second specific period of time or alternatively said first specific period of time being different from said second specific period of time.

10. The method according to any of the claims 1-9, said first intensity being identical to said second intensity or alternatively said first intensity being different from said second intensity.

11. The method according to any of the claims 1-10 , said first polymeric composition and also said second polymeric composition being hydrophilic polymers such as polyolephins and polyester polymers.

12. The method according to any of the claims 1-11, said first polymeric composition being PP (polypropylene) and said second polymeric composition being PET (polyethylene terefthalate).

13. The method according to any of the claims 1-12, said irradiation being irradiation within the infrared spectrum.

14. An injection moulded preform for use in the method according to any of the claims 1-13, said preform comprising an inner blank of a first polymeric composition and an outer blank of a second polymeric composition different from said first polymeric composition, said first blank being loosely positioned within said outer blank, said first polymeric composition having a first absorption spectrum and said second polymeric composition having a second absorption spectrum different from said first absorption spectrum, said first absorption spectrum including a first absorption peak wavelength or wavelengths, said second absorption spectrum including a second absorption peak wavelength or wavelengths, said first absorption peak wavelength or wavelengths being different from said second absorption peak wavelength or wavelengths.

15. The preform according to claim 14, further including any of the features of a preform defined in the method according to the claims 1-13.

16. The preform according to any of the claims 14 or 15, said first polymeric composition being PP (polypropylene) and said second polymeric composition being PET (polyethylene terefthalate).

17. A product produced in accordance with the method according to any of the claims 1-13 and from the preform according to any of the claims 14 or 15, said product including an inner stretch-blow-moulded part originating from said inner blank and loosely positioned within an outer stretch-blow-moulded part originating from said outer blank, or alternatively including an inner stretch-blow-moulded part fixated to said outer stretch-blow-moulded part.
